# EUROPEAN PATENT APPLICATION

(11) **EP 1 819 060 A1**
(43) Date of publication of application: **15.08.2007**
(21) Application number: 05809715.5
(22) Date of filing: 25.11.2005
(51) Int. Cl.: H04B 1/10, H04B 1/16

(54) **RECEIVING DEVICE AND RECEIVING METHOD**

(30) Priority: 30.11.2004 JP 2004346609
(71) Applicant: Pioneer Corporation, Tokyo 153-8654 (JP)
(72) Inventor: KOSUGA, Tadashi, c/o Pioneer Corporation, Kawagoe-shi, Saitama 3508555 (JP)
(74) Representative: Haley, Stephen
(86) International application number: PCT/JP2005/021702
(87) International publication number: WO 2006/059550

(57) **Abstract**

In a receiving device, an intermediate frequency component of a received broadcast radio wave is allowed to selectively pass through an intermediate frequency filter (304), and part of it is output to a narrow-band filter (306), the remaining is amplified at an intermediate frequency amplifying unit (305) to be output to an ARC unit (309). The narrow-band filter (306) allows, out of the intermediate frequency components, a component derived from the desired station radio wave to selectively pass. Then, the electric field intensity of the component derived from the desired station radio wave is detected at a detecting unit (308), and a detection result is output to the ARC unit (309).

## Description

### TECHNICAL FIELD

The present invention relates to a receiving device and a receiving method. However, application of the present invention is not limited to the aforementioned receiving device and receiving method.

### BACKGROUND ART

In a receiving device that performs mobile reception of FM broadcast radio waves or AM broadcast radio waves, e.g., an in-vehicle receiving device, the radio wave state (specifically, the received electric field intensity or the like) of the FM radio waves or AM radio waves varies according to changes in the location of the body that receives the radio wave. Therefore, such a receiving device has an ARC (Automatic Reception Control) function of allowing the receiving state to be changed appropriately according to changes in the situation, or a BSM (Best Station Memory) function of an automatic presetting of broadcasting stations sequentially according to electric field intensity of the received radio wave.

For example, in a receiving device having the ARC function, generally, part of the FM radio wave signal or AM radio wave signal output from an intermediate frequency amplifying unit is extracted, the signal is detected, and from the obtained direct voltage, a signal indicating the electric field intensity level of the signal, i.e., an electric field intensity signal, is detected. Based on the electric field intensity signal, the ARC function, more specifically, a separation control function, a high cut control function, and a mute control function, are realized, so that noise is reduced, thereby enhancing auditory sensation (see, for example, patent document 1). Also, in a receiving device having the BSM function, similar to the case of the ARC function, a broadcasting station is selected by using the above described electric field intensity signal.

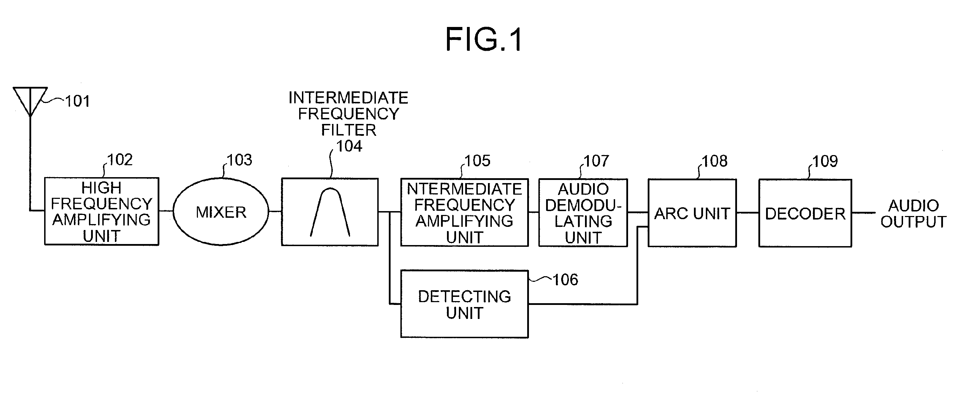

Fig. 1 is a block diagram of a configuration of a conventional receiving device having the ARC function. As shown in Fig. 1, the receiving device includes, as main elements, an antenna 101, a high frequency amplifying unit 102 having a high frequency amplifying circuit, a mixer 103, an intermediate frequency filter 104, an intermediate frequency amplifying unit 105 having an intermediate frequency amplifying circuit, a detecting unit 106, an audio demodulating unit 107, an ARC unit 108, and a decoder 109. The elements 101 to 109 are connected to one another via a transmission channel constituted by, for example, a coaxial cable.

In the receiving device having the above described configuration, the broadcast radio wave received by the antenna 101 is subjected to high frequency amplification at the high frequency amplifying unit 102. Output from the high frequency amplifying unit 102 is output via the mixer 103 to the intermediate frequency filter 104, and the high frequency component is removed according to the characteristics of the intermediate frequency filter 104. The output from the intermediate frequency filter 104 is further input to the intermediate frequency amplifying unit 105, and part of the output is input to the detecting unit 106 provided in parallel with the intermediate frequency amplifying unit 105.

The output of the intermediate frequency filter 104 that is input to the intermediate frequency amplifying unit 105 is subjected to intermediate frequency amplification by the intermediate frequency amplifying unit 105. The output of the intermediate frequency amplifying unit 105, after processing by the audio demodulating unit 107, is input to the ARC unit 108. Meanwhile, at the detecting unit 106, an electric field intensity level (SL: Signal Level) of the output from the intermediate frequency filter 104 is detected, and the detection result is output to the ARC unit 108.

The ARC unit 108 controls the receiving state according to the state of the received radio wave, specifically, an electric field intensity of the received radio wave. For example, when an FM broadcast is received, separation control, high cut control, and mute control are appropriately performed; whereas, when an AM broadcast is received, the high cut control and the mute control are appropriately performed in the ACR unit 108. Output from the ARC unit 108, where the above described controls are performed, is further input to the decoder 109, and then is output as audio output.

In the above described receiving state control performed by the ARC unit 108, the higher the performance of selectively receiving and outputting the broadcast radio wave of a desired broadcasting station (hereinafter, "desired station radio wave") is, the more noise is reduced, thereby enabling realization of enhanced auditory sensation. When receiving broadcast radio waves, broadcast radio waves adjacent to the desired station radio wave are received in addition to the desired station radio wave, these adjacent broadcast radio waves are interference radio waves, a factor in the generation of noise. Hereinafter, such broadcast radio waves of adjacent stations will be referred to as "adjacent interference radio wave".

In the receiving state control performed by the ARC unit 108, the control is performed based on the electric field intensity of the received radio wave as described above. The electric field intensity used as a criterion in the control includes, other than the electric field intensity derived from the desired station radio wave, the electric field intensity derived from the adjacent interference radio wave. This is because the frequency bands of the desired station radio wave and the adjacent interference radio wave are close to each other and the intermediate frequency filter 104 cannot separate the desired station radio wave and the adjacent interference radio wave. For example, in the case of an FM receiving device (FM receiver), an adjacent interference radio wave in a frequency band distanced from the desired station radio wave by 50 to 100 kHz passes the intermediate frequency filter 104 along with the desired station radio wave.

Patent Document 1: Japanese Utility Model Publication No. H6-13247

### DISCLOSURE OF INVENTION

### PROBLEM TO BE SOLVED BY THE INVENTION

Since the ARC unit 108 performs control of the receiving state based on the electric field intensity that includes the component derived from the adjacent interference radio wave as described above, changes in the electric field intensity of the desired station radio wave cannot be accurately reflected due to the effect of the adjacent interference radio wave. Accordingly, appropriate receiving state control corresponding to state changes of the desired station radio wave is difficult to perform.

Specifically, for example, when the electric field intensity of the desired station radio wave is reduced, the ARC unit 108 performs a control (so-called "high cut control") of attenuating a high frequency component, which is a noise component in the received radio wave. However, when the electric field intensity of the desired station radio wave is weak but the electric field intensity of the adjacent interference radio wave is strong in the electric field intensity used as a criterion for judging the degree of control for the above described control, the total electric field intensity becomes strong due to the effect of the adjacent interference radio wave.

In such a case, although the desired station radio wave weak, the ARC unit 108 adopts, as the criterion of judging the degree of control to be set, the total electric field intensity, which includes the electric field intensity of the adjacent interference radio wave, is strong overall, therefore, the reduction in the electric field intensity of the desired station radio wave is not appropriately reflected in the high cut control, and the degree of attenuation in the high frequency component (i.e., degree of control of the high cut control) is reduced.

Therefore, appropriate and sufficient high cut control is difficult to perform due to the effect of the adjacent interference radio wave. Specifically, when the effect of the adjacent interference radio wave is large in the electric field intensity, ideally the high cut control should be performed in an enhanced manner, however, the high cut control is, on the contrary, suppressed when the electric field intensity of the desired station radio wave is strong, presenting an example of a problem.

### MEANS FOR SOLVING PROBLEM

A receiving device of claim 1 according to the present invention includes an intermediate frequency obtaining unit for selectively obtaining, among a high frequency component and an intermediate frequency component of a received broadcast radio wave, the intermediate frequency component; a desired station radio wave obtaining unit for selectively obtaining, among a broadcast radio wave of a desired station and a broadcast radio wave adjacent to the broadcasting wave of the desired station, respectively including the intermediate frequency component obtained by the intermediate frequency unit, the broadcasting wave of the desired station; a detecting unit for detecting an electric field intensity of the broadcasting wave of the desired station obtained by the desired station radio wave obtaining unit; and a reception control unit for receiving a radio wave output from the intermediate frequency obtaining unit, and a detection result of the electric field intensity at the detecting unit, and for controlling, based on the detection result, a receiving state of the radio wave output from the intermediate frequency obtaining unit.

A receiving method of claim 6 according to the present invention includes an intermediate frequency obtaining step for selectively obtaining, among a high frequency component and an intermediate frequency component of a received broadcast radio wave, the intermediate frequency component; a desired station radio wave obtaining step for selectively obtaining, among a broadcast radio wave of a desired station and a broadcast radio wave adjacent to the broadcasting wave of the desired station, respectively including the intermediate frequency component obtained by the intermediate frequency unit, the broadcasting wave of the desired station; a detecting step for detecting an electric field intensity of the broadcasting wave of the desired station obtained by the desired station radio wave obtaining unit; and a reception control step for receiving a radio wave output from the intermediate frequency obtaining unit, and a detection result of the electric field intensity at the detecting unit, and for controlling, based on the detection result, a receiving state of the radio wave output from the intermediate frequency obtaining unit.

### BRIEF DESCRIPTION OF DRAWINGS

Fig. 1 is a block diagram of a configuration of a conventional receiving device;
Fig. 2 is a block diagram of a configuration of a receiving device according to an embodiment of the present invention;
Fig. 3 is a block diagram of a configuration of a receiving device according to a first example of the embodiment of the present invention;
Fig. 4 is a drawing for explaining a configuration of a narrow-band filter of the receiving device shown in Fig. 3;
Fig. 5 is a drawing for explaining an effect of the receiving device shown in Fig. 3;
Fig. 6 is a block diagram of a configuration of a receiving device according to a second example of the embodiment of the present invention;
Fig. 7 is a block diagram of another configuration of the receiving device according to the second example of the embodiment of the present invention;
Fig. 8 is a flowchart for explaining the operations of the switching narrow-band filter units shown in Fig. 6 and Fig. 7;
Fig. 9 is a block diagram of a configuration of a receiving device according to a third example of the embodiment of the present invention; and
Fig. 10 is a flowchart for explaining an operation of the variable narrow-band filter unit shown in Fig. 9.

### EXPLANATIONS OF LETTERS OR NUMERALS

- 201:: intermediate frequency obtaining unit
- 202:: reception control unit
- 203:: desired station radio wave obtaining unit
- 204, 308:: detecting unit
- 301:: antenna
- 302:: high frequency amplifying unit
- 303:: mixer
- 304:: intermediate frequency filter
- 305:: intermediate frequency amplifying unit
- 306, 306a, 306b:: narrow-band filter
- 307:: audio demodulating unit
- 309:: ARC unit
- 310:: decoder
- 402:: adjacent interference radio wave
- 600:: switching narrow-band filter unit
- 602:: filter switching control unit
- 603:: switching circuit
- 800:: variable narrow-band filter unit

### BEST MODE(S) FOR CARRYING OUT THE INVENTION

Exemplary embodiments of a receiving device and a receiving method according to the present invention will be explained in detail below with reference to the accompanying drawings. In the following embodiments, an object is to realize, in receiving control using the electric field intensity of the received radio wave, a receiving control in which the state (specifically, change in the electric field intensity) of the desired station radio wave is accurately reflected. The receiving device and the receiving method may be applied to receiving of FM broadcasting, and to receiving of AM broadcasting.

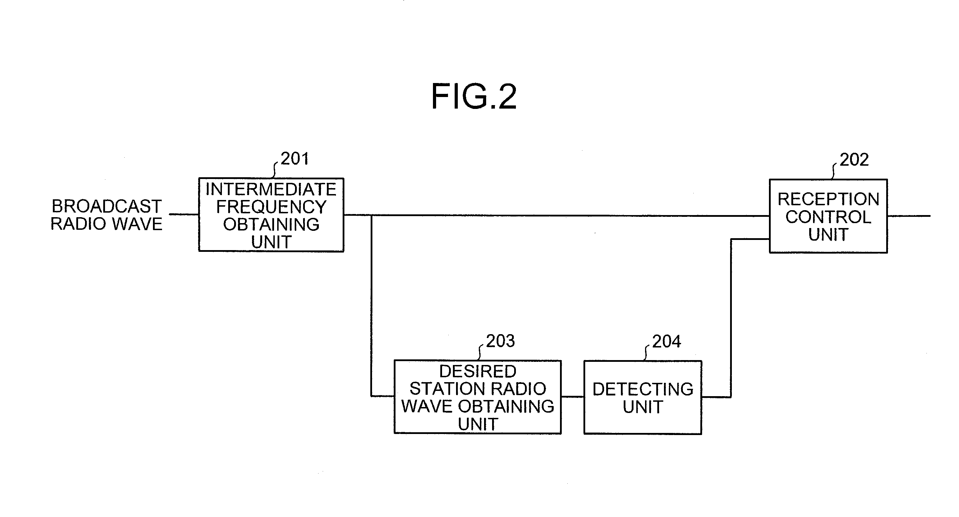

Fig. 2 is a block diagram of a configuration of a receiving device according to an embodiment of the present invention. As shown in Fig. 2, the receiving device according to the embodiment of the present invention includes, as main elements, an intermediate frequency obtaining unit 201, a reception control unit 202, a desired station radio wave obtaining unit 203, and a detecting unit 204.

In the configured receiving device, among the high and intermediate frequency components of the received broadcast radio wave, the intermediate frequency component is selectively obtained by the intermediate frequency obtaining unit 201. Then, the obtained intermediate frequency component is output to the reception control unit 202. At this time, part of the intermediate frequency component thus output is output to the desired station radio wave obtaining unit 203.

Here, the intermediate frequency component obtained at the intermediate frequency obtaining unit 201 includes a desired station radio wave and an adjacent interference radio wave. The desired radio wave obtaining unit 203, with respect to the input intermediate frequency component, separates the desired station radio wave and the adjacent interference wave, and selectively obtains the desired station radio wave. The desired station radio wave obtained at the desired radio wave obtaining unit 203 is further output to the detecting unit 204, where the electric field intensity of the desired station radio wave is detected. Then, a detection result is output to the reception control unit 202.

The reception control unit 202 controls, based on the detection result output from the detecting unit 204, the receiving state of the intermediate frequency component that is output from the intermediate frequency obtaining unit 201 and input therein. Here, in this case, as described above, the electric field intensity of the desired station radio wave, from which the effect of the adjacent interference radio wave is removed, is detected by the radio wave detecting unit 204. Therefore, at the reception control unit 202, a control can be performed in which the effect of the electric field intensity of adjacent interference radio wave is removed to more accurately reflect the electric field intensity of the desired station radio wave. The output of the reception control unit 202 is further input to subsequent processing means (not shown here).

As described above, in the receiving device according to the embodiment of the present invention, since a control of the receiving state can be realized in which the change in the electric field intensity of the desired station radio wave is reflected accurately, a control appropriately coping with the change in the radio wave state of the desired station radio wave can be performed. Accordingly, in the above described receiving device, noise is reduced further than in conventional receiving devices, thereby enabling realization of enhanced auditory sensation.

### FIRST EXAMPLE

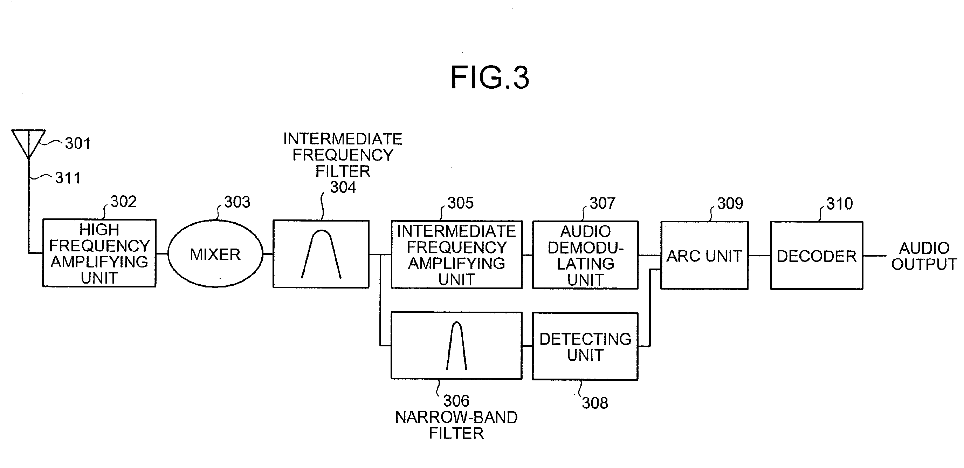

Fig. 3 is a block diagram of a configuration of a receiving device according to a first example of the embodiment of the present invention. As shown in Fig. 3, the receiving device includes, as main elements, an antenna 301, a high frequency amplifying unit 302 constituted by a high frequency amplifying circuit, a mixer 303, an intermediate frequency filter 304, an intermediate frequency amplifying unit 305, a narrow-band filter 306, a audio demodulating unit 307, a detecting unit 308, an ARC unit 309, and a decoder 310.

The above described elements 301 to 310 are connected to one another via a transmission channel 311 formed by a coaxial cable or the like. More specifically, the antenna 301, the high frequency amplifying unit 302, the mixer 303, and the intermediate frequency filter 304 are connected in series in this order via the transmission channel 311. And, the output side of the intermediate frequency filter 304 and the input side of the ARC unit 309 are connected via two transmission channels 311 provided in parallel to each other, namely, a transmission channel 311 having therealong an intermediate frequency amplifying unit 305 and a audio demodulating unit 307, and a transmission channel 311 having therealong a narrow-band filter 306 and a detecting unit 308. The output side of the ARC unit 309 is further connected via the transmission channel 311 to the input side of the decoder 310.

In the configured receiving device, the intermediate frequency filter 304 corresponds to the intermediate frequency obtaining unit; the narrow-band filter 306 corresponds to the desired station radio wave obtaining unit; the detecting unit 308 corresponds to the detecting unit; and the ARC unit 309 corresponds to the reception control unit.

Next, operations of the receiving device having the above described configuration will be described. First, an FM radio wave or AM radio wave (hereinafter, these radio waves will be referred to as a generic term of "broadcasting wave") received via the antenna 301 is subjected to high frequency amplification at the high frequency amplifying unit 302. The output of the high frequency amplifying unit 302 is output via the mixer 303 to the intermediate frequency filter 304. At the intermediate frequency filter 304, the intermediate frequency component of the received broadcast radio wave is allowed to pass through the filter 304 according to a filter characteristic, specifically, according to a passing frequency band. The intermediate frequency component, which passes the intermediate frequency filter 304, is output to the intermediate frequency amplifying unit 305 and to the narrow-band filter 306, respectively.

At the intermediate frequency amplifying unit 305, the input intermediate frequency component is subjected to amplification, output to the audio demodulating unit 307 and processed therein. Output from the audio demodulating unit 307 is further input to the ARC unit 309. Meanwhile, at the narrow-band filter 306, a predetermined frequency component among the input intermediate frequency components is allowed pass through the filter 306 according to a filter characteristic, specifically, according to a passing frequency band. That is, the narrow-band filter 306 allows, among input the intermediate frequency components, the desired station radio wave to selectively pass therethrough, thereby separating the adjacent interference radio wave from the desired station radio wave.

The narrow-band filter 306 has a passing frequency band narrower than that of the intermediate frequency filter 304. More specifically, in the intermediate frequency filter 304, the passing frequency band is set to a band including the desired station radio wave and the adjacent interference radio wave; whereas, in the narrow-band filter 306, the passing frequency band is set to a band including the desired station radio wave and not including the adjacent interference radio wave.

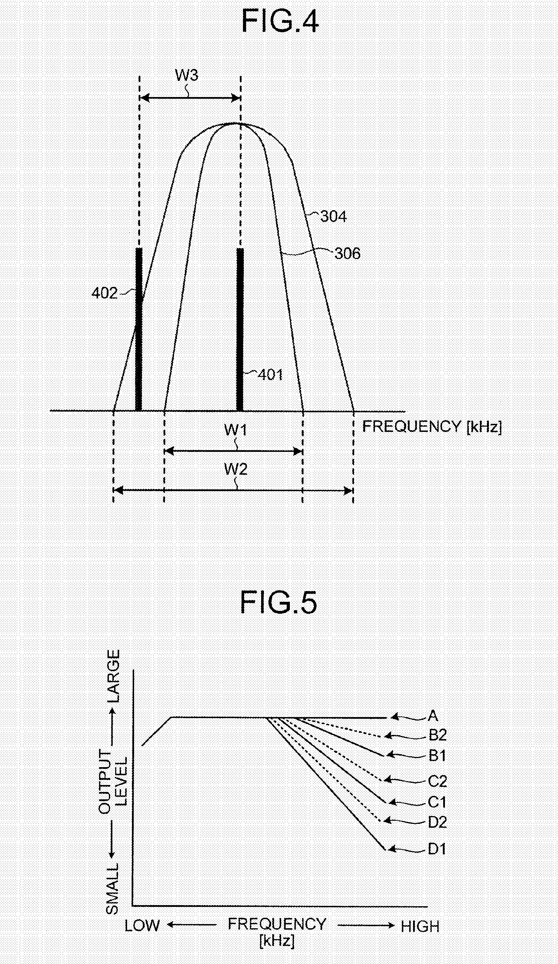

Fig. 4 is a drawing for explaining a configuration of a narrow-band filter of the receiving device shown in Fig. 3. Specifically, the figure shows a filter characteristic of the narrow-band filter 306 and a filter characteristic of the intermediate frequency filter 304. As shown in Fig. 4, in the narrow-band filter 306, a passing frequency band W1 is set to a frequency band that includes a desired station radio wave 401, and does not include an adjacent interference radio wave 402. In other words, the passing frequency band W1 of the narrow-band filter 306 is narrower than a commonly used passing frequency band W2 of the intermediate frequency filter 304, whereby the passing frequency band is set in such a manner that the desired radio wave 401 is included in a overlapping range of the filters 306 and 304 and that the adjacent interference radio wave 402 is included in a non-overlapping range thereof.

For example, here, in the case of an FM receiving device (FM receiver), the adjacent interference radio wave 402 exists in the frequency band adjacent to the desired station radio wave 401, and a distance W3 between the radio waves 401 and 402 is approximately 100 kHz. And, the passing frequency band W2 of the intermediate frequency filter 304 has a range of approximately 500 kHz, the center frequency of which falls on the frequency band of the desired station radio wave 401.

In this arrangement of the desired station frequency radio wave 401, the adjacent interference radio wave 402, and the intermediate frequency filter 304, the passing frequency band W1 of the narrow-band filter 306 is set so as to have a range of approximately 200 kHz, the center frequency of which falls on the desired station radio wave 401.

The desired station radio wave 401, which passes the narrow-band filter 306, is further output to the detecting unit 308. The detecting unit 308 has, for example, a signal meter to detect the electric field intensity of the desired station radio wave 401 input therein. A detection result is output to the ARC unit 309. Then, in the ARC unit 309, according to the detected electric field intensity of the desired station radio wave 401, an appropriate control amount is set and the receiving state is controlled. At the ARC unit 309, for example, in the case of FM broadcasting, the separation control, the high cut control, and the mute control are performed, whereas in the case of AM broadcasting, the high cut control and the mute control are performed.

The operation of the ARC unit 309 will be described in detail. The ARC unit 309 grasps, based on the electric field intensity of the desired station radio wave 401 input from the detecting unit 308, the radio wave state (specifically, electric field intensity) of the desired station radio wave 401 to control the receiving state so as to minimize noise under the concerned radio wave situation. That is, the ARC unit 309 performs an appropriate control by adjusting, based on the electric field intensity of the desired station radio wave, a control amount for each control, the separation control, the high cut control, and the mute control, so as to reduce noise. In this case, the ARC unit 309 increases the control amount as the electric field intensity of the desired station radio wave 401 decreases, thereby promoting the control.

Here, unlike the conventional case where the electric field intensity of the components of the desired station radio wave and the adjacent interference radio wave are used, the electric field intensity used as a criterion by the ARC unit 309 for setting the amount of control performed is an electric field intensity of only the desired station radio wave, which passes selectively through the narrow-band filter 306. Accordingly, in the control operation of the ARC unit 309 performed based on the electric field intensity thus obtained, changes in the electric field intensity of the desired station radio wave can be accurately reflected, thereby enabling realization of reception control appropriately corresponding with changes in the radio wave state of the desired station radio wave. The output from the ARC unit 309 is further input to the decoder 310, and then output as sound.

Fig. 5 is a drawing for explaining an effect of the receiving device shown in Fig. 3. More specifically, as shown in Fig. 5, the solid line in the graph indicates the high cut control performed in the ARC unit 309 of the receiving device according to the first example (see Fig. 3), whereas the broken line in the graph indicates the high cut control in the ARC unit 108 of the conventional receiving device (see Fig. 1). Here, the horizontal axis indicates frequency while the vertical axis indicates output level.

As shown in Fig. 5, in the ARC units 309 and 108 (see Fig. 1 and Fig. 3), when the electric field intensity of the desired station radio wave is strong, because the high cut control is not performed, the output level of the high frequency component becomes large (see arrow A in the drawing). On the other hand, when the electric field intensity of the desired station radio wave decreases, because the high cut control is promoted corresponding to the decrease, output level of the high frequency component is lowered.

As indicated by broken line in the graph, in the conventional receiving device, with a decrease in the electric field intensity of the desired station radio wave, the high cut control enables the output level of the high frequency component of the radio wave to be reduced in the order as indicated by arrow A, arrow B2, arrow C2 and arrow D2 in the drawing. On the other hand, as indicated by the solid line in graph, in the receiving device according to the first example, with a decrease in the electric field intensity of the desired station radio wave, the high cut control enables the output level of the high frequency component of the desired radio wave to be reduced in the order as indicated by arrow A, arrow B1, arrow C1, and arrow D1 in the drawing.

Here, in the conventional receiving device, besides the effect of the desired station radio wave, since the electric field intensity used for setting the control amount in the high cut control is also affected by the adjacent interference radio wave, the high cut control is affected by the electric field intensity of the adjacent interference radio wave. As a result, compared with the inherent high cut control (i.e., corresponding to the case of the receiving device of the first example indicated by the solid line in the graph) that is performed according to the electric field intensity of the desired station radio wave, the control amount of the high cut control, namely, the attenuation amount of the high frequency component is smaller, and the output level of the high frequency component is larger. Thus, in the conventional receiving device, the effect of the interference radio wave makes it difficult to realize high cut control appropriately corresponding to the electric field intensity of the desired station radio wave.

In contrast, in the receiving device according to the first example, the ARC unit 309 can perform the high cut control that corresponds only to the electric field intensity of the desired station radio wave without the effect of the electric field intensity of the adjacent interference radio wave. Accordingly, changes in the electric field intensity of the desired station radio wave are accurately reflected and high cut control that appropriately corresponds to such a change can be realized.

As described above, in the receiving device according to the first example, since the ARC unit 309 performs reception control based on only the electric field intensity of the desired station radio wave without the effect of the electric field intensity of the adjacent interference radio wave, changes in the electric field intensity of the desired station radio wave 401 are reflected in an accurate and appropriate manner, whereby reception control that appropriately corresponds to changes in the radio wave state of the radio wave 401 can be realized. Accordingly, in such a receiving device, noise reduction is promoted further than in the conventional receiving device enabling a more enhanced auditory sensation to be realized.

In the first example, the passing frequency band W1 of the narrow-band filter 306 is not limited to the above described setting, but set appropriately in a relative manner according to the distance W3 between the desired station radio wave 401 and the adjacent interference radio wave 402. Settings other than the above described setting may be adopted so long as the setting is such that the desired station radio wave 401 is allowed to selectively pass through to remove the adjacent interference radio wave 402. Also, when the distance W3 between the desired radio wave 401 and the adjacent interference radio wave 402 is changed, the setting is determined appropriately according thereto.

### SECOND EXAMPLE

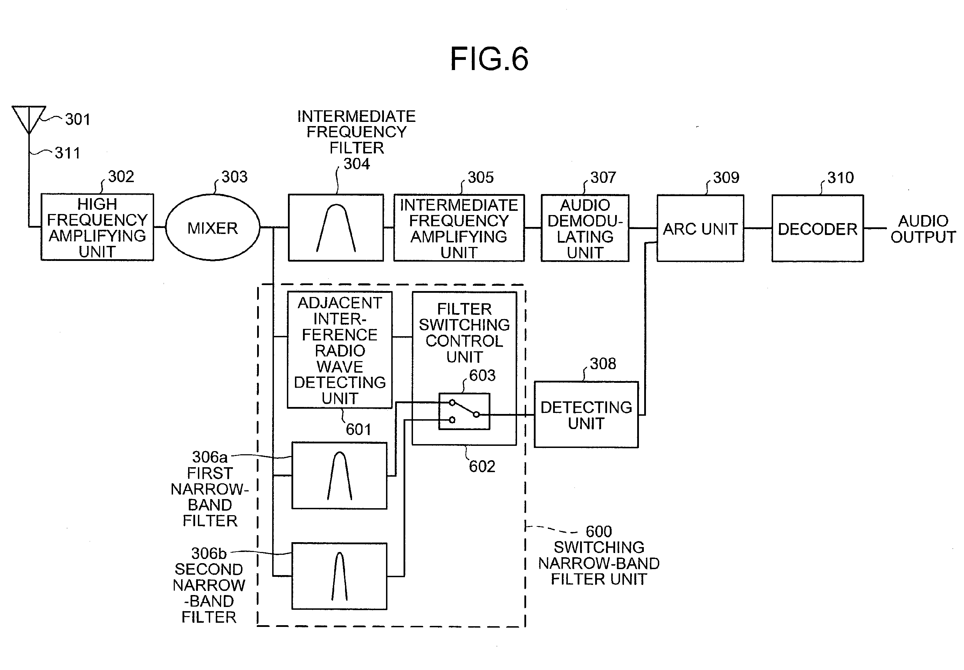

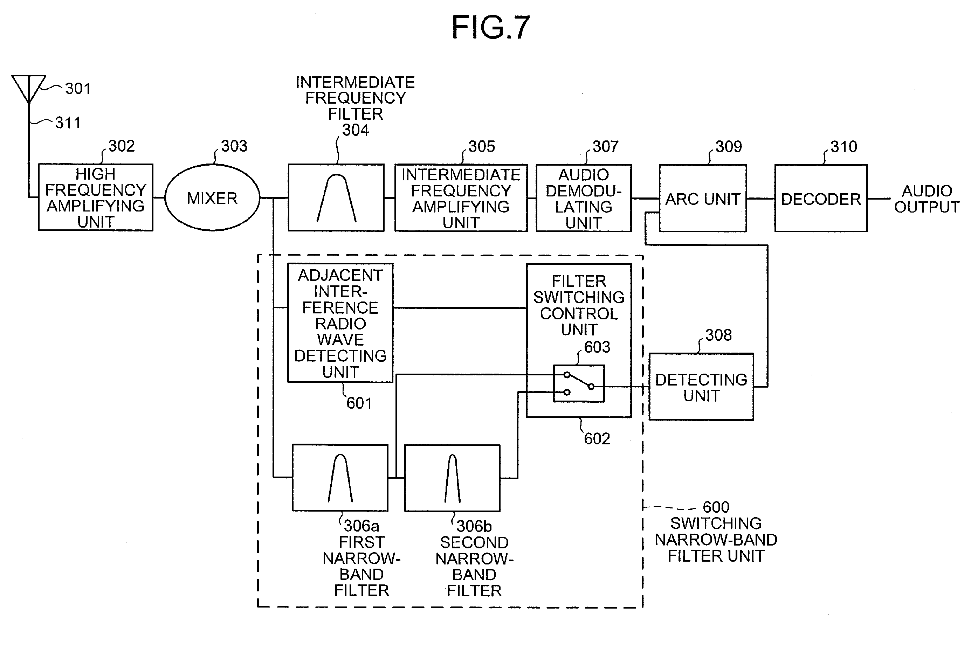

Fig. 6 is a block diagram of a configuration of a receiving device according to a second example of the embodiment of the present invention. Fig. 7 is a block diagram of another configuration of the receiving device according to the second example of the embodiment of the present invention. Elements shown in Fig. 6 and Fig. 7 that are the same elements as those shown in Fig. 3 are denoted by the same reference symbols shown in Fig. 3. Hereinafter, the descriptions will be made of characteristics of the second example while omitting the description as to the same elements as those shown in Fig. 3.

As shown in Fig. 6 and Fig. 7, the receiving device according to the second example has a configuration similar to that of the receiving device according to the first example as shown in Fig. 3. However, the former is different from the latter in the following respects. Specifically, the receiving device according to the second example includes a switching narrow-band filter unit 600 including multiple narrow-band filters, i.e., a first narrow-band filter 306a and a second narrow-band filter 306b having respective passing frequency bands different from each other. Also, the output from the mixer 303 is input to the switching narrow-band filter unit 600, and the output from the switching narrow-band filter unit 600 is input to the detecting unit 308.

While here a configuration in which the output from the mixer 303 is input to the switching filter unit 600 is exemplified, besides this configuration, a configuration may be adopted in which the output from the intermediate frequency filter 304 is input to the switching narrow-band filter unit 600.

The switching narrow-band filter unit 600 includes an adjacent interference radio wave detecting unit 601, the first narrow-band filter 306a, and the second narrow-band filter 306b, the elements 601, 306a, and 306b being provided in parallel and each being capable of receiving the output from the mixer 303, and also includes a filter switching control unit 602 having a switching circuit 603. The filter switching control unit 602 is so configured as to receive the output from the adjacent interference radio wave detecting unit 601, and also to receive the outputs of the first and the second narrow-band filters 306a and 306b. And, the filter switching control unit 602 is configured so as to enable either one of the selected outputs, selected in a manner as described hereinafter, of the first and the second narrow-band filters 306a and 306b to be input to the detecting unit 308.

The adjacent interference radio wave detecting unit 601 detects how far the adjacent interference radio wave is distanced from the desired station radio wave, i.e., the distance between the two radio waves, the distance being denoted by the arrow W3 shown in Fig. 4. Incidentally, other than this configuration, the adjacent interference radio wave detecting unit 601 may have, for example, a configuration in which only the presence or absence of the adjacent interference radio wave is detected.

The first and the second narrow-band filters 306a and 306b have approximately the same center frequency, but have respective passing frequency bands that differ. In this case, the first narrow-band filter 306a has a passing frequency band wider than that of the second narrow-band filter 306b. The relationship of the first and the second narrow-band filters 306a and 306b with the intermediate frequency filter 304 is the same as the relationship of the narrow-band filter 306 with the intermediate frequency filter 304, the filters 306 and 304 being referred to in the above described first example.

In the configuration shown in Fig. 6, the first and the second narrow-band filters 306a and 306b are connected and provided in parallel. In contrast, in the configuration shown in Fig. 7, the first and the second narrow-band filters 306a and 306b are connected and provided in series. In the configuration in which the first and the second narrow-band filters 306a and 306b are connected and provided in series, the property of the first narrow-band filter 306a provided in the front position and the property of the second filter 306b provided in the rear position are combined, so that a filter having a narrower band can be configured more easily.

The filter switching control unit 602 controls the switching operation of the switching circuit 603 based on the output from the adjacent interference radio wave detecting unit 601. By the switching operation of the switching circuit 603, either the first narrow-band filter 306a or the second narrow-band filter 306b is selectively switched for output to the detecting unit 308.

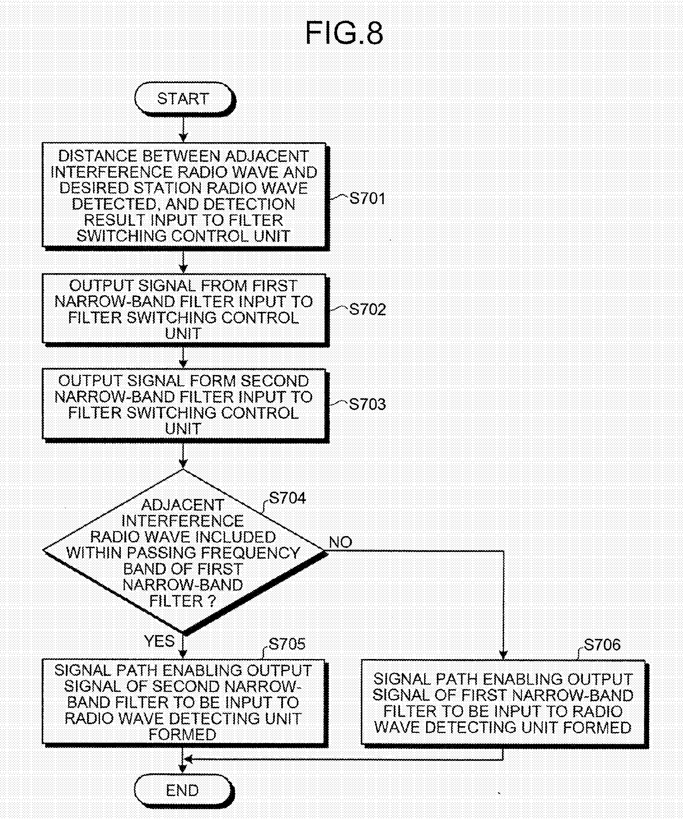

Fig. 8 is a flowchart for explaining the operations of the switching narrow-band filter units shown in Fig. 6 and Fig. 7. With respect to the elements 301 to 305, and 307 to 310, the operations are the same as those described in the first example although the explanations thereof are omitted here.

As shown in Fig. 8, in the switching narrow-band filter unit 600 (see Fig. 6 and Fig. 7), the output from the mixer 303 (see Fig. 6 and Fig. 7) is input to the adjacent interference radio wave detecting unit 601 (see Fig. 6 and Fig. 7) and to the first and the second narrow-band filters 306a and 306b (see Fig. 6 and Fig. 7), respectively. The adjacent interference radio wave detecting unit 601 (see Fig. 6 and Fig. 7) detects, based on these inputs, the distance between the adjacent interference radio wave and the desired station radio wave. Then, the result of the detection is input to the filter switching control unit 602 (Fig. 6 and Fig. 7) (step S701).

On the other hand, each of the first and the second narrow-band filters 306a and 306b (as to these filters, see Fig. 6 and Fig. 7) processes (filters) the output of the mixer 303, which is input thereto, according to the passing frequency band. Owing to this processing, in each of the first and the second narrow-band filters 306a and 306b (as to these filters, see Fig. 6 and Fig. 7), a component included in the passing frequency band is allowed to selectively pass through each of the filters 306a and 306b, and are input to the filter switching control unit 602 as an output signal (see Fig. 6 and Fig. 7) (step S702, step 5703) .

The filter switching control unit 602 (see Fig. 6 and Fig. 7) judges whether the adjacent interference radio wave is included in the passing frequency band of the first narrow-band filter 306a (see Fig. 6 and Fig. 7) by using the result of the detection output from the adjacent interference radio wave detecting unit 601 (see Fig. 6 and Fig. 7) (step S704) .

When the adjacent interference radio wave is not included within the passing frequency band of the first narrow-band filter 306a (see Fig. 6 and Fig. 7) (step S704: NO), the filter switching control unit 602 controls the switching circuit 603 so as to form a signal path through which the output signal from the first narrow-band filter 306a (see Fig. 6 and Fig. 7) is input to the detecting unit 308 (see Fig. 6 and Fig. 7) (step S706).

On the other hand, when the adjacent interference radio wave is included within the passing frequency band of the first narrow-band filter 306a (see Fig. 6 and Fig. 7) (step S704: YES), the filter switching control unit 602 controls the switching circuit 603 so as to form a signal path through which the output signal from the second narrow-band filter 306b (see Fig. 6 and Fig. 7) is input to the detecting unit 308 (see Fig. 6 and Fig. 7) (step S705).

As described above, in the receiving device according to the second example, in the switching narrow-band filter 600 at the first and the second narrow-band filters 306a and 306b separation of the adjacent interference radio wave and the desired station radio wave are separated, thereby enabling the desired station radio wave to selectively pass and to be output to the detecting unit 308. Accordingly, the same effects as those mentioned in the receiving device according to the first example can be obtained.

Further, in the receiving device according to the second example, a configuration is realized in which, by considering a relative relationship between the desired station radio wave and the adjacent interference radio wave (specifically, the distance between the two radio waves) and reflecting the relative relationship, among the first and the second narrow-band filters 306a and 306b, the one which is the most suitable for the selective passing of the desired station radio wave is appropriately selected.

Therefore, in the receiving device according to the second example, compared with the receiving device according to the first example in which the narrow-band filter 306 (see Fig. 3) having a fixed passing frequency band is used, the electric field intensity of the desired station radio wave can be detected more accurately. As a result, in the ARC unit 309, a more preferred reception control is realized. These effects are obtained based on the following background.

Specifically, to detect the electric field intensity of the desired station radio wave, it is preferred that the input to the detecting unit 308 has a frequency band of a range similar to that of the passing frequency band of the intermediate frequency filter 304. Therefore, it is preferred that the switching narrow-band filter unit 600 has a passing frequency band as wide as possible within a range which does not include the adjacent interference radio wave.

For example, when the passing frequency bands of the first and the second narrow-band filters 306a and 306b are unnecessarily narrowed without considering the frequency characteristic of the adjacent interference radio wave, the electric field intensity of the desired station radio wave, which is detected at the detecting unit 308, is reduced to a value smaller than the inherent electric field intensity by the amount of energy removed through the processing executed by the first and the second narrow-band filters 306a and 306b. When the electric field intensity is thus reduced, such reduction makes it difficult to accurately detect the electric field intensity of the desired station radio wave, an undesirable situation.

In contrast, in the receiving device according to the second example, by appropriately coping with a relative relationship between an adjacent interference radio wave and the desired station radio wave, an optimal filter arrangement can be realized in which filter selection is performed among the first and second narrow-band filters 306a and 306b while keeping the passing frequency band as wide as possible within a range that does not include an adjacent interference radio wave. Therefore, the desired station radio wave having an electric field intensity of the strength close to that of the inherent electric field intensity can be output to the detecting unit 308. Accordingly, in the receiving device according to the second example, an electric field intensity of the desired station radio wave can be detected accurately. As a result, at the ARC unit 309, the reception control can be performed more appropriately corresponding to the change in the radio wave state of the desired station radio wave.

While in the above description, a case is shown in which the receiving device according to the second example of the present invention has the two narrow-band filters 306a and 306b connected in parallel or in series, the number of the narrow-band filters provided is not limited thereto. The above described effects can be obtained in a receiving device having a configuration in which two or more narrow-band filters, the passing frequency bands being different from each other, are arranged in parallel or in series.

### THIRD EXAMPLE

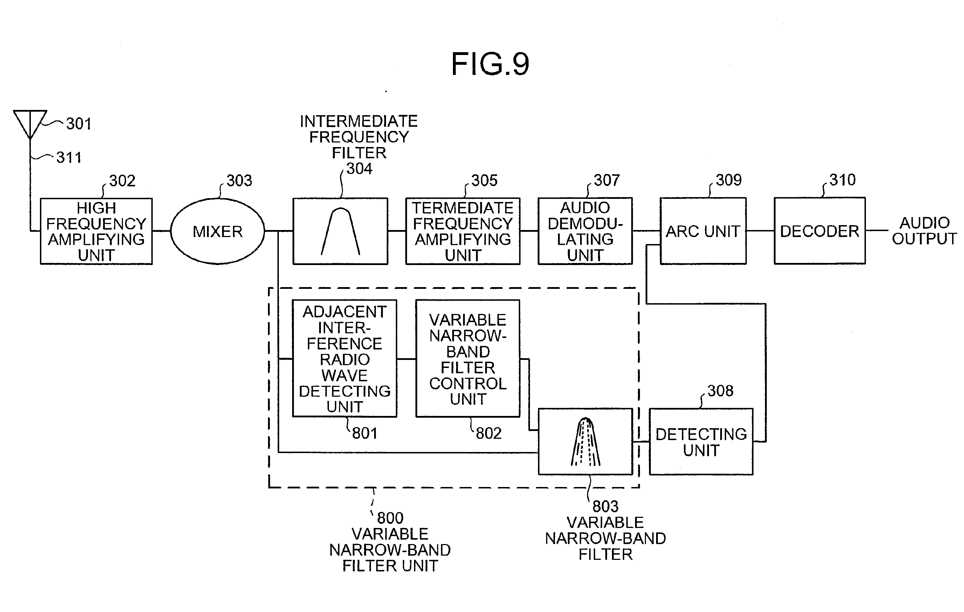

Fig. 9 is a block diagram of a configuration of a receiving device according to a third example of the embodiment of the present invention. In Fig. 9, the same elements as those shown in Fig. 3 are denoted by the same reference symbols. In the following description, explanations are made as to the characteristic features of the third example while omitting the descriptions on the same elements as Fig. 3.

As shown in Fig. 9, the receiving device according to the third example has a configuration similar to that of the receiving device according to the first example, but is different from the receiving device according to the first example in the following respects. Specifically, the receiving device according to the third example has a variable narrow-band filter unit 800 having a variable narrow-band filter 803 capable of changing the passing frequency band. Thus, the output from the mixer 303 is input to the variable narrow-band filter unit 800, and output of the variable narrow-band filter unit 800 is supplied to the detecting unit 308.

While here is described, as an example, the configuration in which the output from the mixer 303 is input to the filter unit 800, a configuration other than this may be adopted in which the output from the intermediate frequency filter 304 is input to the variable narrow-band filter unit 800.

The variable narrow-band filter unit 800 includes an adjacent interference radio wave detecting unit 801 and a variable narrow-band filter 803, which are provided in parallel and can respectively receive the output from the mixer 303; and also includes a variable narrow-band filter control unit 802 to which the output from the adjacent interference radio wave detecting unit 801 is input. The output from the variable narrow-band filter control unit 802 is input to the variable band filter 803. And, the output from the variable narrow-band filter 803 is input to the detecting unit 308.

Here, the adjacent interference radio wave detecting unit 801, which has a configuration similar to that of the adjacent radio wave detecting unit 601 according to the second example (see Fig. 6), detects the distance between the adjacent interference radio wave and the desired station radio wave. On the other hand, the variable narrow-band filter 803 is a filter in which the center frequency is set to a constant value and the passing frequency band is made variable. In other words, the variable narrow-band filter 803 can realize, only by a single filter, a filter arrangement of multiple filters having the same center frequency but differing respective passing frequency bands.

The variable narrow-band filter control unit 802 sets a passing frequency band that is most suitable for the variable narrow-band filter 803, based on output from the adjacent interference radio wave detecting unit 801, and controls the variable narrow-band filter 803 based on the setting.

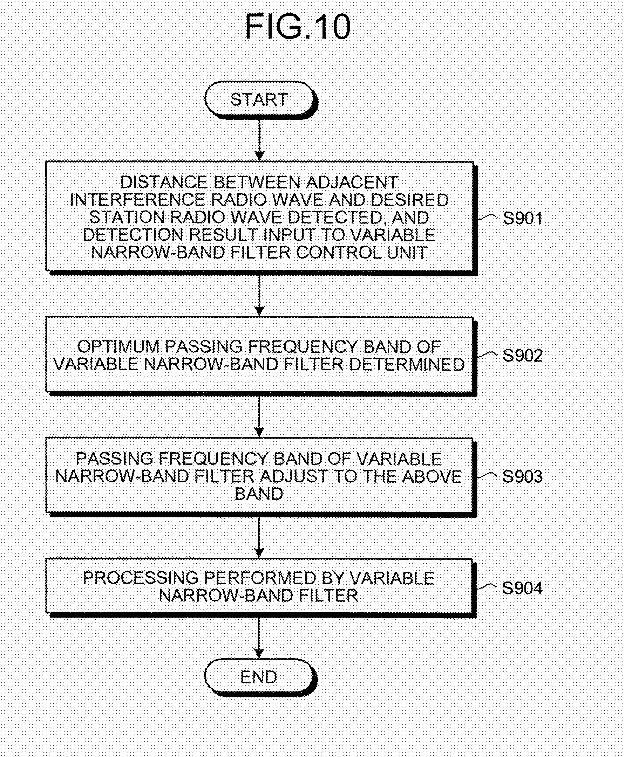

Fig. 10 is a flowchart for explaining an operation of the variable narrow-band filter unit shown in Fig. 9. While the descriptions are omitted here, operations of the elements other than the variable narrow-band filter unit 800, i.e., the elements 301 to 305, and 307 to 310 are the same as those described in the first example.

As shown in Fig. 10, in the variable narrow-band filter unit 800 (see Fig. 9), the output from the mixer 303 (see Fig. 9) is input to the adjacent interference radio wave detecting unit 801 (see Fig. 9) and to the variable narrow-band filter 803 (see Fig. 9), respectively. The adjacent interference radio wave detecting unit 801 (see Fig. 9) detects, based on these inputs, a distance between the adjacent interference radio wave and the desired station radio wave. The detection result is input to the variable narrow-band filter control unit 802 (see Fig. 9) (step 5901).

On the other hand, the variable narrow-band filter control unit 802 (see Fig. 9), based on the detection result of the adjacent interference radio wave detecting unit 801 (see Fig. 9) input therein, determines an optimum passing frequency band of the variable narrow-band filter 803 (see Fig. 9) (step S902). Here, the term "optimal passing frequency band" refers to, for example, a passing frequency band, which has the widest band width among passing frequency bands that do not include an adjacent interference radio wave, and a center frequency that is situated near the desired station radio wave.

Subsequently, the variable narrow-band filter control unit 802 (see Fig. 9) controls, based on the optimum passing frequency band thus obtained, the variable narrow-band filter 803 (see Fig. 9) and adjusts the passing frequency band of the variable narrow-band filter 803 (see Fig. 9) to the optimal band (step 5903).

For example, when the distance between the adjacent interference radio wave and the desired station radio wave, both being detected at the adjacent interference detecting unit 801 (see Fig. 9), is large, the variable narrow-band filter 803 (see Fig. 9) is adjusted so as to make the passing frequency band wide. On the other hand, when the distance between the adjacent interference radio wave and the desired station radio wave is small, the variable narrow-band filter 803 (see Fig. 9) is adjusted so as to make the passing frequency band narrow.

In this way, the variable narrow-band filter 803 (see Fig. 9), the passing frequency band range of which is adjusted, processes (filters) the output from the mixer 303 (see Fig. 9) according to the passing frequency band (step S904). Thereby, the desired station radio wave is allowed to selectively pass the variable narrow-band filter 803 (see Fig. 9), and is output to the detecting unit 308 (see Fig. 9).

As described above, the receiving device according to the third example, in the variable narrow-band filter unit 800, the adjacent interference radio wave and the desired station radio wave are separated, thereby allowing the desired station radio wave to selectively pass therethrough and to be output to the radio wave detecting unit 308. Accordingly, the same effects as those described as to the receiving device in the first example can be obtained.

Also, in this case, while considering the relative relationship between the desired station radio wave and the adjacent interference radio wave (specifically, the distance between the two radio waves) so as to appropriately reflect the relative relationship, the passing frequency band of the variable narrow-band filter 803 can be appropriately adjusted to an optimal value. Accordingly, the same advantageous effects as those described in the second example.

The above described first to third examples are examples of the receiving device according to the present invention, and therefore the receiving device according to the present invention is not limited thereto. For example, in the first to third examples, a case is described in which the electric field intensity of the desired station radio wave obtained by means of the characteristic features of the present invention is used for the reception control performed at the ARC unit 309. However, as another configuration besides this, the electric field intensity of the desired station radio wave may be applied to the BSM function.

While the above described receiving device and receiving method according to the present invention can be applied to various uses, they exhibit remarkable advantageous effects when applied to, for example, a mobile receiving device for onboard vehicle use, in which the state of broadcast radio wave greatly changes according to vehicular movement.

## Claims

1. A receiving device comprising:
an intermediate frequency obtaining unit that selectively obtains, among a high frequency component and an intermediate frequency component of a received broadcast radio wave, the intermediate frequency component;
a desired station radio wave obtaining unit that selectively obtains the broadcasting wave of the desired station from among a broadcast radio wave of a desired station and a broadcast radio wave adjacent to the broadcasting wave of the desired station, respectively included in the intermediate frequency component obtained by the intermediate frequency unit;
a detecting unit that detects an electric field intensity of the broadcasting wave of the desired station obtained by the desired station radio wave obtaining unit; and
a reception control unit that receives a radio wave output from the intermediate frequency obtaining unit, and a detection result of the electric field intensity at the detecting unit, and that controls, based on the detection result, a receiving state of the radio wave output from the intermediate frequency obtaining unit.

2. The receiving device according to claim 1, wherein
the desired station radio wave obtaining unit includes a desired station radio wave filter having a predetermined passing frequency band, and
the passing frequency band of the desired station radio wave filter includes a frequency band of the broadcast radio wave of the desired station, and excludes a frequency band of the broadcast radio wave of the adjacent station.

3. The receiving device according to claim 2, wherein
the intermediate frequency obtaining unit includes an intermediate frequency filter,
the passing frequency band of the desired station radio wave filter has an intermediate frequency approximately the same as that of the intermediate frequency filter, and
the width of the passing frequency is narrower than the width of the passing frequency band of the intermediate frequency filter.

4. The receiving device according to any one of claims 1 to 3, wherein
the desired station radio wave obtaining unit includes a plurality of the desired station radio wave filters respectively having different passing frequency bands, and
one filter is selected among the desired station radio wave filters based on a relative relationship between the frequency band of the broadcast radio wave of the adjacent station and the frequency band of the broadcast radio wave of the desired station.

5. The receiving device according to any one of claims 1 to 3, wherein
the desired station radio wave obtaining unit includes a desired station radio wave filter in which the passing frequency band can be changed, and
the passing frequency band of the desired station radio wave filter is adjusted based on a relative relationship between the frequency band of the broadcast radio wave of the adjacent station and the frequency band of the broadcast radio wave of the desired station.

6. A receiving method comprising:
an intermediate frequency obtaining step for selectively obtaining, among a high frequency component and an intermediate frequency component of a received broadcast radio wave, the intermediate frequency component;
a desired station radio wave obtaining step for selectively obtaining, among a broadcast radio wave of a desired station and a broadcast radio wave adjacent to the broadcasting wave of the desired station, respectively including the intermediate frequency component obtained by the intermediate frequency unit, the broadcasting wave of the desired station;
a detecting step for detecting an electric field intensity of the broadcasting wave of the desired station obtained by the desired station radio wave obtaining unit; and
a reception control step for receiving a radio wave output from the intermediate frequency obtaining unit, and a detection result of the electric field intensity at the detecting unit, and for controlling, based on the detection result, a receiving state of the radio wave output from the intermediate frequency obtaining unit.
